# EUROPÄISCHE PATENTSCHRIFT

(11) **EP 3 607 277 B1**
(45) Veröffentlichungstag und Bekanntmachung des Hinweises auf die Patenterteilung: **27.01.2021**
(21) Anmeldenummer: 18711915.1
(22) Anmeldetag: 15.03.2018
(51) Int. Cl.: G01F 1/34, G01F 15/14, G01L 9/00, G01L 19/00, G01L 23/00

(54) **SENSORELEMENT ZUR ERFASSUNG MINDESTENS EINER EIGENSCHAFT EINES FLUIDEN MEDIUMS**
SENSOR ELEMENT FOR DETECTING AT LEAST ONE PROPERTY OF A FLUID MEDIUM
ÉLÉMENT CAPTEUR PERMETTANT DE DÉTECTER AU MOINS UNE PROPRIÉTÉ D'UN MILIEU FLUIDE

(30) Priorität: 05.04.2017 DE 102017205838
(43) Veröffentlichungstag der Anmeldung: 12.02.2020
(73) Patentinhaber: Robert Bosch GmbH, 70442 Stuttgart (DE)
(72) Erfinder: HUEFTLE, Gerhard, 71546 Aspach (DE); PLOGMANN, Benjamin, 73061 Rosswaelden (DE); KONZELMANN, Uwe, 71679 Asperg (DE)
(86) Internationale Anmeldenummer: PCT/EP2018/056572
(87) Internationale Veröffentlichungsnummer: WO 2018/184812

(56) Entgegenhaltungen:
- EP-A1- 2 423 647
- WO-A1-2007/089156
- DE-A1- 19 529 544
- DE-U1-202005 018 866
- US-A1- 2005 257 605
- US-A1- 2015 308 913

## Beschreibung

### Stand der Technik

Aus dem Stand der Technik sind verschiedene Arten von Sensorelementen zur Erfassung mindestens einer Eigenschaft eines fluiden Mediums bekannt. Ohne Beschränkung weiterer möglicher Einschränkungen wird die Erfindung im Folgenden unter Bezugnahme auf druckbasierte Luftmassenmesser beschrieben. Auch andere Ausgestaltungen sind jedoch grundsätzlich möglich.

So ist es allgemein beispielsweise bekannt, die Luftmasse in Luftsystemen wie beispielsweise im Ansaugtrakt einer Brennkraftmaschine durch verschiedene Messprinzipien zu bestimmen. Neben thermischen Messprinzipien, beispielsweise in Form von Heißfilmluftmassenmessern (HFM), sind auch druckbasierte Luftmassenmessungen bekannt, welche auf mindestens einer Druckmessung basieren. Beispielsweise sind hierbei die so genannten Prandtl-Sonden oder Venturi-Rohre zu nennen. Beispielsweise kann zur Bestimmung einer Luftmasse, welche pro Zeiteinheit durch eine Röhre strömt, ein Differenzdruck aus zwei statischen Drücken oder einem statischen Druck und einem Absolutdruck gemessen werden. Die Genauigkeit der Luftmassenmessung lässt sich bei diesen Verfahren beispielsweise durch Bestimmung der Dichte mittels zusätzlicher Druck- und/oder Temperaturmessungen verbessern.

Beispielsweise zeigt DE 10 2014 212 854 A1 einen Durchflussmesser zur Messung eines Durchflusses eines mit einer Hauptströmungsrichtung durch ein Strömungsrohr strömenden fluiden Mediums. Der Durchflussmesser umfasst ein Störelement, welches einen Strömungsquerschnitt des Strömungsrohrs teilweise verengt. Weiterhin umfasst der Durchflussmesser einen ersten Druckmesspunkt, der bezüglich der Hauptströmungsrichtung stromaufwärts des Störelements angeordnet ist, und einen zweiten Druckmesspunkt, der bezüglich der Hauptströmungsrichtung stromabwärts des Störelements angeordnet ist. Das Störelement ist zum veränderbaren Verengen des Strömungsquerschnitts des Strömungsrohrs ausgebildet.

DE 10 2007 053 273 A1 beschreibt einen Durchflussmesser zur Messung eines Durchflusses eines mit einer Hauptströmungsrichtung durch ein Strömungsrohr strömenden fluiden Mediums. Der Durchflussmesser weist ein Steckerteil mit einer Anströmseite und einer Abströmseite auf. In dem Steckerteil ist auf der Anströmseite eine anströmseitig durch eine Öffnung zugängliche Staukammer ausgebildet. In einer Seitenwand der Staukammer ist eine erste Druckmessstelle aufgenommen. In einer Außenwand des Steckerteils ist eine zweite Druckmessstelle aufgenommen

DE 20 2005 018866 U1 beschreibt ein Sensorelement für einen Durchflussmesser mit einem Strömungskanal, von dem ein Druckabgriff abzweigt, in welchem ein Drucksensor zur Erfassung eines Drucks eines fluiden Mediums in dem Strömungskanal angeordnet ist.

Trotz der mittels der bekannten Messvorrichtungen erzielten Vorteile verbleiben nach wie vor eine Vielzahl an technischen Herausforderungen bei der Messung von Strömungseigenschaften fluider Medien. Insbesondere im Ansaugtrakt von Brennkraftmaschinen besteht eine Herausforderung beispielsweise darin, die verwendeten Sensoren vor Wasser und Schmutzpartikeln zu schützen und somit eine Fehlanzeige der Drucksensoren und damit verbunden eine Fehlanzeige der Luftmasse zu vermeiden.

### Offenbarung der Erfindung

Es wird dementsprechend ein Sensorelement zur Erfassung mindestens einer Eigenschaft eines fluiden Mediums vorgeschlagen. Das Sensorelement kann, wie nachfolgend noch näher beschrieben wird, beispielsweise einen Luftmassenmesser, einen Durchflussmesser, einen Strömungsmesser, einen Absolutdruckmesser oder einen Differenzdruckmesser bilden. Beispielsweise kann die Erfindung in einer oder mehreren der oben genannten Durchflussmesser eingesetzt werden. Auch andere Ausgestaltungen sind jedoch grundsätzlich möglich.

Die mindestens eine Eigenschaft des fluiden Mediums kann insbesondere eine Strömungseigenschaft sein, beispielsweise eine Geschwindigkeit, ein Volumenstrom, ein Massenstrom, ein Druck, eine Druckdifferenz oder eine andere physikalisch messbare Eigenschaft. Auch andere Eigenschaften sind jedoch grundsätzlich möglich. Insbesondere kann das Sensorelement zur Erfassung eines Absolutdrucks und/oder eines Differenzdrucks des fluiden Mediums ausgestaltet sein.

Das Sensorelement kann insbesondere ganz oder teilweise als Steckfühler ausgebildet sein. So kann das Gehäuse beispielsweise einen Steckfühler bilden oder einen Steckfühler umfassen, welcher in ein Strömungsrohr des fluiden Mediums, beispielsweise in einem Ansaugtrakt einer Brennkraftmaschine, eingesteckt werden kann oder in dieses Strömungsrohr hineinragen kann. Auch andere Ausgestaltungen sind jedoch grundsätzlich möglich.

Das fluide Medium kann grundsätzlich ein beliebiges Gas oder eine beliebige Flüssigkeit sein. Insbesondere kann das fluide Medium eine Ansaugluftmasse einer Brennkraftmaschine sein oder auch ein Abgas einer Brennkraftmaschine. Dementsprechend ist das Sensorelement insbesondere im Bereich der Automobiltechnik einsetzbar. Auch andere Einsatzgebiete sind jedoch grundsätzlich möglich.

Das Sensorelement umfasst mindestens ein Gehäuse mit mindestens einem von dem fluiden Medium durchströmbaren Strömungskanal. Der Strömungskanal kann beispielsweise als geschlossenes Strömungsrohr ausgestaltet sein. Alternativ kann der Strömungskanal jedoch auch einfach durch eine Wand des Gehäuses gebildet werden, welche von dem fluiden Medium überströmbar ist. Das Gehäuse kann beispielsweise aus einem Kunststoff, einem keramischen Material oder auch aus einem metallischen Material hergestellt sein.

Von dem Strömungskanal, beispielsweise von einer Wand des Strömungskanals, zweigt ein Druckabgriff ab. Unter einem Druckabgriff ist dabei allgemein ein quer zu der Strömung in dem Strömungskanal verlaufender Kanal zu verstehen, in welchen hinein das fluide Medium, welches durch den Strömungskanal strömt, abgezweigt werden kann. Der Druckabgriff kann insbesondere als blinder Kanal, beispielsweise als Sackloch, ausgestaltet sein.

In dem Druckabgriff ist mindestens ein Drucksensor zur Erfassung eines Drucks des fluiden Mediums angeordnet. Wie nachfolgend noch näher beschrieben wird, kann es sich bei dem Drucksensor insbesondere um mindestens einen mikromechanischen Drucksensor, beispielsweise mindestens ein mikromechanisches Drucksensorelement, handeln, beispielsweise einen Halbleitersensor. Derartige Sensoren basieren üblicherweise darauf, dass durch einen Absolutdruck oder einen Differenzdruck eine Membran des Drucksensorelements verformt wird, wobei die Verformung der Membran beispielsweise mittels Piezo-Sensoren und/oder mittels Widerständen gemessen werden kann.

Zwischen dem Strömungskanal und dem Drucksensor ist mindestens eine Kaverne zur Aufnahme von Verunreinigungen in mindestens einer Wand des Druckabgriffs angeordnet. Unter einer Kaverne ist dabei allgemein ein Raum zu verstehen, welcher zu dem Druckabgriff hin geöffnet ist. Beispielsweise kann der Druckabgriff im Wesentlichen zylindrisch ausgestaltet sein, wobei die Kaverne einen Hohlraum außerhalb eines Zylindervolumens des zylindrischen Druckabgriffs aufweist. Die Kaverne umfasst eine Aussparung, auch als Ausnehmung bezeichnet, in mindestens einer Wand des Druckabgriffs. Dabei weist die Kaverne, wie unten noch näher beschrieben, eine ringförmige Aussparung auf. Die Kaverne ist insbesondere hin zu dem Druckabgriff geöffnet.

Der Druckabgriff weist eine von dem Strömungskanal abzweigende Bohrung auf. So kann der Druckabgriff beispielsweise eine von dem Strömungskanal, insbesondere von einer Wand des Strömungskanals, abzweigende zylindrische Bohrung aufweisen, welche beispielsweise als runde oder auch als polygonale zylindrische Bohrung ausgestaltet sein kann. Der Druckabgriff kann insbesondere als von dem Strömungskanal abzweigende Sacklochbohrung ausgestaltet sein, wobei der Drucksensor vorzugsweise an einem Ende der Sacklochbohrung, also beispielsweise an einer Stirnseite des Sacklochs, angeordnet sein kann. Beispielsweise kann der Druckabgriff ganz oder teilweise als zylindrische Bohrung ausgestaltet sein, wobei ein Ende der zylindrischen Bohrung zum Strömungskanal hin geöffnet ist, wohingegen das andere Ende der zylindrischen Bohrung ganz oder teilweise durch den Drucksensor verschlossen ist und wobei sich beispielsweise in einer Wand, beispielsweise einer zylindrischen Wand, der Bohrung die mindestens eine Kaverne, beispielsweise die mindestens eine Aussparung befindet. Die Aussparung kann beispielsweise radialsymmetrisch um eine Achse der zylindrischen Bohrung angeordnet sein, beispielsweise ringförmig. Beispielsweise kann die Aussparung als Ringnut ausgebildet sein. So kann die Kaverne beispielsweise allgemein als Aussparung in einer Wand der Bohrung ausgestaltet sein, insbesondere als Nut, beispielsweise als ringförmige und insbesondere kreisringförmige Nut, welche insbesondere axialsymmetrisch zu einer Achse der Bohrung angeordnet sein kann.

Die ringförmige Aussparung kann insbesondere einen Durchmesser oder Äquivalentdurchmesser aufweisen, welcher beispielsweise mindestens das 1,2-fache eines Durchmessers oder Äquivalentdurchmessers der Bohrung beträgt, vorzugsweise mindestens das 1,5-fache und besonders bevorzugt das 1,5- bis 2,5-fache des Durchmessers oder Äquivalentdurchmessers der Bohrung.

Weiterhin kann die Aussparung entlang einer Achse der Bohrung eine Höhe aufweisen. Diese Höhe kann beispielsweise 3 bis 6 mm betragen.

Die Aussparung kann insbesondere eine Hinterschneidung aufweisen. Unter einer Hinterschneidung ist dabei allgemein eine Kaverne zu verstehen, welche eine scharfe Kante aufweist, so dass, von dem Strömungsrohr aus gesehen, ein Teil der Kaverne durch die scharfe Kante verdeckt und nicht sichtbar ist. So kann die Aussparung insbesondere an einem Übergang zu der Wand der Bohrung mindestens eine Kante aufweisen, beispielsweise eine ringförmig umlaufende Kante, vorzugsweise eine Kante mit einem Winkel von im Wesentlichen 90°.

Zwischen der Aussparung und dem Drucksensor kann insbesondere weiterhin mindestens ein Wandabschnitt der Wand der Bohrung angeordnet sein, welcher keine Aussparung aufweist. So kann die mindestens eine Kaverne insbesondere beabstandet von dem Drucksensor angeordnet sein.

Der Druckabgriff kann insbesondere im Wesentlichen senkrecht von dem Strömungskanal abzweigen. In diesem Zusammenhang sowie auch zuvor ist, wenn von "im Wesentlichen senkrecht" oder von "in einem Winkel von im Wesentlichen 90°" die Rede ist, ein Winkel von 90° zu verstehen, wobei Abweichungen von ± 15°, vorzugsweise nicht mehr als ± 10° und besonders bevorzugt von nicht mehr als ± 5° jedoch tolerabel sind.

### Vorteile der Erfindung

Das erfindungsgemäße Sensorelement weist gegenüber herkömmlichen Sensorelementen zahlreiche Vorteile auf. Insbesondere können in der Kaverne Verunreinigungen wie Wasser und Schmutzpartikel aufgenommen werden. Beispielsweise können in den Druckabgriff hinein Wasser und Schmutzpartikel geraten, welche, beispielsweise aufgrund der Strömung und/oder einer Oberflächenspannung, entlang einer Wand des Druckabgriffs kriechen und so in die Kaverne gelangen können. Auf diese Weise lässt sich der Drucksensor vor Wasser und Schmutzpartikeln schützen, indem diese in der Kaverne angelagert werden. Der Druckabgriff lässt sich dementsprechend derart gestalten, dass beispielsweise Wasser und Schmutzpartikel nicht zum Sensorelement vordringen können und somit beispielsweise nur trockene Luft zu dem Drucksensor vordringt. Ein Vorteil dieser Ausgestaltung besteht darin, dass sich grundsätzlich eine temporäre Fehlanzeige von Drucksensoren durch Wasser und Schmutzablagerung weitgehend vermeiden lässt. Weiterhin lässt sich eine dauerhafte Kennlinienveränderung von Drucksensoren und somit eine fehlerhafte Bestimmung der Luftmasse durch Schmutzablagerungen, insbesondere nach Verdunstung des Wassers, zumindest weitgehend vermeiden.

### Kurze Beschreibung der Zeichnungen

Weitere Einzelheiten und optionale Merkmale der Erfindung sind in den Ausführungsbeispielen dargestellt, welche in den nachfolgenden Zeichnungen schematisch gezeigt sind.

Es zeigen:
- Figur 1: ein Ausführungsbeispiel eines erfindungsgemäßen Sensorelements;
- Figuren 2A und 2B: verschiedene Darstellungen eines erfindungsgemäßen Sensorelements in Form eines Steckfühlers; und
- Figur 3: einen Ansaugtrakt einer Brennkraftmaschine mit einer Anordnung des erfindungsgemäßen Sensorelements zwischen einem Ladeluftkühler und einem Drosselventil.

### Ausführungsformen der Erfindung

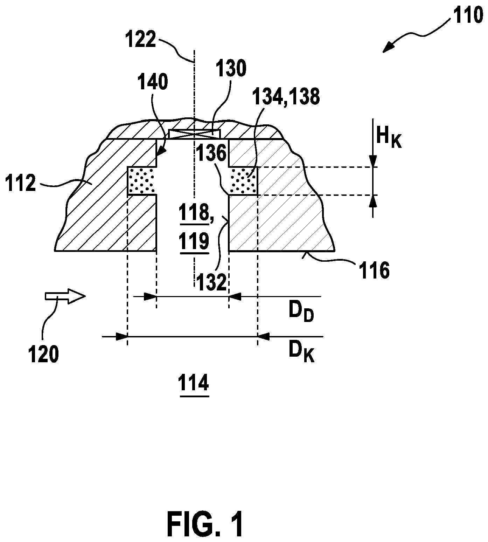

In Figur 1 ist ein Ausführungsbeispiel eines erfindungsgemäßen Sensorelements 110 in einer schematischen Schnittdarstellung gezeigt. Das Sensorelement 110 umfasst ein Gehäuse 112, welches einteilig oder auch mehrteilig ausgestaltet sein kann. Das Gehäuse 112 bildet mindestens einen von dem fluiden Medium durchströmbaren Strömungskanal 114. Hierbei bestehen im Rahmen der vorliegenden Erfindung mehrere Möglichkeiten, wie dieses Gehäuse 112 den Strömungskanal 114 bildet. So kann der Strömungskanal 114 beispielsweise vollständig von dem Gehäuse 112 umschlossen sein, so dass der Strömungskanal 114 beispielsweise vollständig in dem Gehäuse 112 angeordnet ist. Alternativ oder zusätzlich kann das Gehäuse 112 jedoch auch lediglich mindestens eine Strömungskanalwand 116 aufweisen oder bilden, welche von dem fluiden Medium überströmt werden kann. Der Strömungskanal 114 kann dementsprechend beispielsweise als Strömungsrohr ausgestaltet sein oder auch beispielsweise als geöffneter Raum, welcher zumindest einseitig von der Strömungskanalwand 116 gebildet wird.

In der Strömungskanalwand 116 ist mindestens ein Druckabgriff 118 ausgebildet. Der Druckabgriff 118 kann insbesondere ganz oder teilweise als Bohrung 119 ausgestaltet sein. Dieser Druckabgriff 118 zweigt von dem Strömungskanal ab. Zu diesem Zweck kann der Druckabgriff 118 beispielsweise, wie in Figur 1 gezeigt, eine Bohrung aufweisen, welche vorzugsweise in einem rechten Winkel zur Strömungskanalwand 116 von dem Strömungskanal 114 abzweigt. Beispielsweise kann der Strömungskanal 114 in einer Hauptströmungsrichtung 120 von dem fluiden Medium durchströmbar sein, welche beispielsweise parallel zu der Strömungskanalwand 116 ausgebildet sein kann. Der Druckabgriff 118 und/oder eine Achse 122 des Druckabgriffs 118, beispielsweise eine Zylinderachse, können beispielsweise im Wesentlichen senkrecht zu dieser Hauptströmungsrichtung 120 verlaufen. Auch andere Ausgestaltungen sind jedoch grundsätzlich möglich.

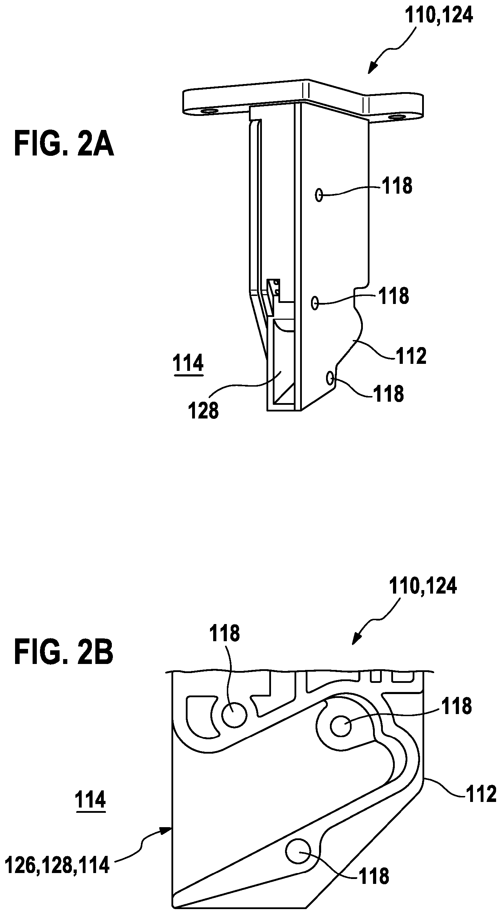

Anhand der Figuren 2A und 2B sei verdeutlicht, wie das Gehäuse 112 und der Druckabgriff 118 ausgestaltet sein können. So zeigen diese Figuren verschiedene Darstellungen eines erfindungsgemäßen Sensorelements 110, welches in den gezeigten Ausführungsbeispielen als Steckfühler 124 ausgebildet ist. Der Steckfühler 124 kann beispielsweise in den Strömungskanal 114 hineinragen, so dass eine Strömungskanalwand 116 teilweise durch das Gehäuse 112 des Steckfühlers gebildet wird. Dabei zeigt Figur 2A eine Ausgestaltung des Steckfühlers 124 mit geschlossenem Deckel, wohingegen in der Ausgestaltung gemäß Figur 2B ein Deckel abgenommen ist, so dass ein in dem Gehäuse 112 angeordneter Kanalabschnitt 126, in welchen durch eine Öffnung 128 fluides Medium eintreten kann, sichtbar ist. Für mögliche Ausgestaltungen des Sensorelements 110 kann beispielsweise auf die oben zitierte DE 10 2007 053 273 A1 verwiesen werden. Auch andere Ausgestaltungen sind jedoch grundsätzlich möglich. Wie in diesen Figuren erkennbar ist, kann das Sensorelement 110 mehrere Druckabgriffe 118 aufweisen, welche innerhalb des Kanalabschnitts 126 und/oder an einer Außenseite des Steckfühlers 124 angeordnet sein können. So kann jeder Bereich des Gehäuses 112, welcher von dem fluiden Medium erreichbar ist und von dem fluiden Medium überströmbar ist, als Strömungskanalwand 116 wirken, welche mindestens einen Druckabgriff 118 aufweist. Beispielsweise können in dem dargestellten Beispiel zwei Druckabgriffe auf einer Außenseite des Gehäuses 112 angeordnet sein, also auf einer Außenseite des Steckfühlers 124, und ein Druckabgriff 118 im Inneren des Kanalabschnitts 126. Verschiedene Ausgestaltungen sind möglich.

Wie in Figur 1 weiterhin erkennbar ist, ist in dem Druckabgriff 118 mindestens ein Drucksensor 130 angeordnet. Beispielsweise kann der Druckabgriff 118 im Wesentlichen zylindrisch um die Achse 122 ausgestaltet sein, und der Drucksensor 130 kann sich beispielsweise an einem Ende des zylindrisch ausgestalteten Druckabgriffs 118 befinden. Beispielsweise kann der Druckabgriff 118 dementsprechend als Sackloch ausgestaltet sein, mit einer zum Strömungskanal 114 hin geöffneten Seite und einer von dieser geöffneten Seite abgewandten Stirnseite, welche geschlossen ist und an welcher der Drucksensor 130 angeordnet ist.

Der Druckabgriff 118 umfasst weiterhin eine Wand 132, welche beispielsweise als Zylinderwand 132 ausgestaltet sein kann. Beispielsweise kann diese Wand 132 kreiszylindrisch ausgestaltet sein. Auch ein polygonaler Querschnitt ist jedoch grundsätzlich möglich. In dieser Wand 132 ist in dem dargestellten Ausführungsbeispiel eine Kaverne 134 angeordnet. Diese Kaverne 134 weist vorzugsweise mindestens eine scharfe Kante 136 auf, so dass die Kaverne 134 vorzugsweise eine Hinterschneidung in dem zylindrischen Druckabgriff 118 bildet. Die Kaverne 134 kann dementsprechend beispielsweise als Aussparung 138 ausgebildet sein, beispielsweise als Ringnut, beispielsweise als zylindrische Ringnut. Die Kaverne 134 kann beispielsweise axialsymmetrisch zur Achse 122 sein und kann beispielsweise einen Durchmesser oder Äquivalentdurchmesser D_{K} aufweisen, wohingegen die zylindrische Bohrung des Druckabgriffs 118 selbst beispielsweise einen Durchmesser oder Äquivalentdurchmesser D_{D} aufweisen kann. Weiterhin kann die Kaverne 134 entlang der Achse 122 beispielsweise eine Höhe, beispielsweise eine Zylinderhöhe, H_{K} aufweisen. Zwischen der Aussparung 138 und dem Drucksensor 130 und/oder der Stirnseite des Druckabgriffs 118 kann beispielsweise ein Wandabschnitt 140 angeordnet sein, welcher ohne Aussparung und ohne Kaverne 134 ausgebildet ist. Dementsprechend kann die Kaverne 134 beispielsweise beabstandet von dem Drucksensor 130 ausgebildet sein.

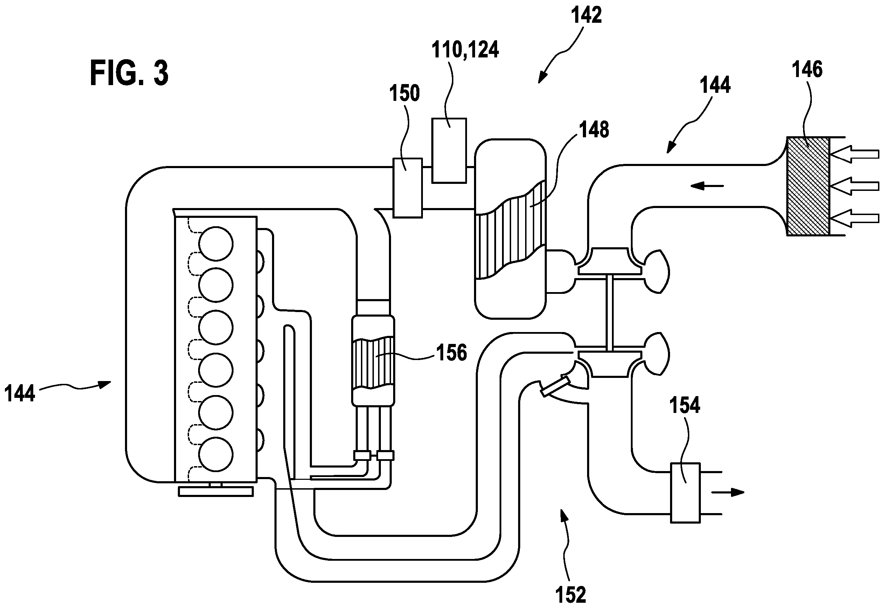

Das Sensorelement 110, beispielsweise das als Steckfühler 124 ausgebildete Sensorelement 110 gemäß den Figuren 2A und 2B, kann beispielsweise in einem Luftsystem 142 einer Brennkraftmaschine 144 angeordnet sein, welches schematisch in Figur 3 gezeigt ist. Wie dort erkennbar, umfasst dieses Luftsystem 142 einen Ansaugtrakt 144 mit einem Luftfilter 146, einem Ladeluftkühler 148 und einem Drosselventil 150 sowie einen Abgastrakt 152 mit einer Abgasklappe 154. Weiterhin kann optional eine Abgasrückführung 156 vorgesehen sein. Das Sensorelement 110 kann beispielsweise zwischen dem Ladeluftkühler 148 und dem Drosselventil 150 angeordnet sein und kann beispielsweise als druckbasierter Luftmassenmesser ausgestaltet sein.

Bei der dargestellten Anordnung können Wasser und Schmutzpartikel mit der Strömung zu den Druckabgriffen 118 des Sensorelements 110 vordringen. Um den mindestens einen Drucksensor 130, welcher als Absolutdruck- und/oder als Differenzdrucksensor wirken kann, vor Wasser- und/oder Schmutzablagerungen zu schützen, ist die Kaverne 134 gemäß Figur 1 vorgesehen. Diese kann als Hinterschneidung ausgestaltet sein und auf diese Weise in den Druckabgriff integriert werden, wodurch sich die Kaverne 134 bildet. Wassertropfen, die in den Druckabgriff 118 eindringen und an der Wand 132 zum Drucksensor 130 ablaufen, werden durch die Hinterschneidung in die Kaverne 134 abgelenkt. Durch Adhäsionskräfte verbleibt das Wasser in der Kaverne 134 und dringt nicht zum Drucksensor 130 vor, wodurch der Drucksensor 130 vor Wasser und Schmutzpartikeln geschützt bleibt, so lange, bis die Kaverne 134 vollständig gefüllt ist. Damit das Wasser durch Adhäsion in der Kaverne verbleibt, sollte die Kavernenhöhe H_{K} 4 bis 6 mm nicht übersteigen. Allgemein kann also bei diesem Ausführungsbeispiel oder auch bei anderen Ausführungsbeispielen die Kaverne 134 eine Höhe H_{K} aufweisen, welche vorzugsweise 4 bis 6 mm nicht übersteigt.

Der Wasserschutz kann durch einen vergrößerten Kavernendurchmesser D_{K} gesteigert werden. Alternativ oder zusätzlich kann der Kavernenquerschnitt A_{K} bei Einhalten einer maximalen Kavernenhöhe H_{K} verbessert werden.

Weiterhin können in diesem oder auch in anderen Ausführungsbeispielen des Sensorelements 110 anstelle einer einzigen Kaverne 134 auch mehrere Kavernen vorgesehen sein. So können beispielsweise mehrere Aussparungen 134 vorgesehen sein, beispielsweise in Form mehrerer sequenziell angeordneter Ringnuten, welche entlang der Achse 118 in der Wand 132 angeordnet sind.

## Patentansprüche

1. Sensorelement (110) zur Erfassung mindestens einer Eigenschaft eines fluiden Mediums, umfassend mindestens ein Gehäuse (112), wobei das Gehäuse (112) mindestens einen von dem fluiden Medium durchströmbaren Strömungskanal (114) bildet, wobei von dem Strömungskanal (114) ein Druckabgriff (118) abzweigt, wobei in dem Druckabgriff (118) mindestens ein Drucksensor (130) zur Erfassung eines Drucks des fluiden Mediums angeordnet ist,
**dadurch gekennzeichnet, dass**
zwischen dem Strömungskanal (114) und dem Drucksensor (130) mindestens eine Kaverne (134) zur Aufnahme von Verunreinigungen in mindestens einer Wand (132) des Druckabgriffs (118) angeordnet ist, wobei der Druckabgriff (118) eine von dem Strömungskanal (114) abzweigende Bohrung (119) aufweist und die Kaverne (134) als eine ringförmige Aussparung (138) in einer Wand (132) der Bohrung (119) ausgestaltet ist.

2. Sensorelement (110) nach dem vorhergehenden Anspruch, wobei das Sensorelement (110) ausgewählt ist aus der Gruppe bestehend aus: einem Luftmassenmesser, einem Durchflussmesser, einem Strömungsmesser, einem Absolutdruckmesser, einem Differenzdruckmesser.

3. Sensorelement (110) nach Anspruch 1, wobei die Bohrung (119) ganz oder teilweise als zylindrische Bohrung (119) ausgestaltet ist.

4. Sensorelement (110) nach Anspruch 1 oder 3, wobei der Druckabgriff (118) als von dem Strömungskanal (114) abzweigende Sacklochbohrung ausgestaltet ist, wobei der Drucksensor (130) an einem Ende der Sacklochbohrung angeordnet ist.

5. Sensorelement (110) nach Anspruch 1, wobei die ringförmige Aussparung (138) einen Durchmesser oder Äquivalentdurchmesser aufweist, welcher mindestens das 1,2-fache eines Durchmessers oder Äquivalentdurchmesser der Bohrung (119) beträgt.

6. Sensorelement (110) nach Anspruch 5, wobei die Aussparung (138) eine Hinterschneidung aufweist.

7. Sensorelement (110) nach einem der Ansprüche 5 bis 6, wobei die Aussparung (138) an einem Übergang zu der Wand (132) der Bohrung (119) mindestens eine Kante (136) aufweist.

8. Sensorelement (110) nach einem der Ansprüche 5 bis 7, wobei zwischen der Aussparung (138) und dem Drucksensor (130) mindestens ein Wandabschnitt (140) der Wand (132) der Bohrung (119) angeordnet ist, welcher keine Aussparung (138) aufweist.

## Claims

1. Sensor element (110) for detecting at least one property of a fluid medium, comprising at least one housing (112), wherein the housing (112) forms at least one flow duct (114) through which the fluid medium can flow, wherein a pressure tap (118) branches off from the flow duct (114), wherein at least one pressure sensor (130) for sensing a pressure of the fluid medium is arranged in the pressure tap (118),
**characterized in that**
at least one cavity (134) for receiving impurities in at least one wall (132) of the pressure tap (118) is arranged between the flow duct (114) and the pressure sensor (130), wherein the pressure tap (118) has a bore hole (119) which branches off from the flow duct (114), and the cavity (134) is embodied as an annular recess (138) in a wall (132) of the bore hole (119).

2. Sensor element (110) according to the preceding claim, wherein the sensor element (110) is selected from the group comprising: an air mass flow rate meter, a through-flow meter, a flow meter, an absolute pressure meter, a differential pressure meter.

3. Sensor element (110) according to Claim 1, wherein the bore hole (119) is configured entirely or partially as a cylindrical bore hole (119).

4. Sensor element (110) according to Claim 1 or 3, wherein the pressure tap (118) is configured as a blind bore hole branching off from the flow duct (114), wherein the pressure sensor (130) is arranged at one end of the blind bore hole.

5. Sensor element (110) according to Claim 1, wherein the annular recess (138) has a diameter or equivalent diameter which is at least 1.2 times the diameter or equivalent diameter of the bore hole (119) .

6. Sensor element (110) according to Claim 5, wherein the recess (138) has an undercut.

7. Sensor element (110) according to one of Claims 5 to 6, wherein the recess (138) has at least one edge (136) at a junction with the wall (132) of the bore hole (119).

8. Sensor element (110) according to one of Claims 5 to 7, wherein at least one wall section (140) of the wall (132) of the bore hole (119) which does not have a recess (138) is arranged between the recess (138) and the pressure sensor (130).

## Revendications

1. Elément capteur (110) permettant de détecter au moins une propriété d'un milieu fluide, comprenant au moins un boîtier (112), le boîtier (112) formant au moins un passage d'écoulement (114) par lequel peut passer le milieu fluide, une prise de pression (118) bifurquant du passage d'écoulement (114), au moins un capteur de pression (130) étant disposé dans la prise de pression (118) pour détecter une pression du milieu fluide,
**caractérisé en ce qu'**au moins une cavité (134) destinée à recevoir des impuretés est disposée entre le passage d'écoulement (114) et le capteur de pression (130) dans au moins une paroi (132) de la prise de pression (118), la prise de pression (118) présentant un perçage (119) bifurquant du passage d'écoulement (114), et la cavité (134) étant configurée sous la forme d'un évidement annulaire (138) dans une paroi (132) du perçage (119).

2. Elément capteur (110) selon la revendication précédente, l'élément capteur (110) étant sélectionné dans le groupe composé : d'un débitmètre massique, d'un capteur de débit, d'un débitmètre, d'une jauge de pression absolue, d'une jauge de pression différentielle.

3. Elément capteur (110) selon la revendication 1, dans lequel le perçage (119) est configuré en totalité ou en partie comme un perçage cylindrique (119).

4. Elément capteur (110) selon la revendication 1 ou 3, dans lequel la prise de pression (118) est configurée comme un perçage de trou borgne bifurquant du passage d'écoulement (114), le capteur de pression (130) étant disposé à une extrémité du perçage de trou borgne.

5. Elément capteur (110) selon la revendication 1, dans lequel l'évidement annulaire (138) présente un diamètre ou un diamètre équivalent qui fait au moins 1,2 fois un diamètre ou diamètre équivalent du perçage (119).

6. Elément capteur (110) selon la revendication 5, dans lequel l'évidement (138) présente une contre-dépouille.

7. Elément capteur (110) selon l'une quelconque des revendications 5 et 6, dans lequel l'évidement (138) présente au moins une arête (136) au niveau d'une transition avec la paroi (132) du perçage (119).

8. Elément capteur (110) selon l'une quelconque des revendications 5 à 7, dans lequel au moins une partie de paroi (140) de la paroi (132) du perçage (119) qui ne présente aucun évidement (138) est disposée entre l'évidement (138) et le capteur de pression (130).
